# EUROPEAN PATENT SPECIFICATION

(11) **EP 0 867 118 B1**
(45) Date of publication and mention of the grant of the patent: **27.09.2000**
(21) Application number: 98302115.5
(22) Date of filing: 20.03.1998
(51) Int. Cl.: A22B 5/20, A22B 5/00, A22C 17/00, B23D 53/12, B23D 55/08, B23D 55/06

(54) **Spinal column separation**
Das Entnehmen der Wirbelsäule
Le prélèvement de la colonne vertébrale

(30) Priority: 25.03.1997 GB 9706144
(43) Date of publication of application: 30.09.1998
(73) Proprietor: MEAT AND LIVESTOCK COMMISSION, Snowdon Drive, Milton Keynes MK6 1AX (GB)
(72) Inventor: Pole, Andrew, Congresbury, Bristol, BS19 5EB (GB)
(74) Representative: Skone James, Robert Edmund

(56) References cited:
- EP-A- 0 714 607
- WO-A-93/08966
- DE-B- 1 237 923
- GB-A- 788 494
- NL-A- 279 923
- NL-A- 8 603 213
- SE-B- 336 542
- US-A- 2 962 752
- US-A- 3 995 350

## Description

The invention relates to a method of separating at least part of the spinal column from an animal carcase and to a band saw for that purpose.

The spinal cord of any animal is considered to be a source of contamination and in the case of cattle the spinal cord is now classified as Specified Bovine Offal requiring special handling and disposal procedures. The current slaughterhouse practice is to cut or split the carcase into two halves using a manual or automatic cleaver, or a band, reciprocating or circular saw. The blade passes through the centre line of the carcase and cuts into the spinal cord often causing cord material to be smeared over the cut surfaces and smaller particles to be released into the atmosphere.

The spinal canal, which carries the spinal cord is situated at varying distances from the dorsal mid-line. The minimum distance is in the order of 50mm (in the sacral region), the maximum in the order of 300mm (in the cranial thoracic region). This variation, and particularly the depth of cut required in the thoracic region introduce considerable practical difficulties into a system which attempts to remove the cord by cutting from the dorsal aspect of the carcase. The cord is situated at a more or less constant centre line depth of 60mm from the ventral bodies of the vertebrae and is thus more accessible using a constant depth of cut.

In WO-A-97/39634, we describe a band saw which projects beyond the end of the support in a general U-shape but it has been found that this is difficult to use on smaller animals such as lamb which require the saw to bend around a relatively small diameter, for example about 35mm.

DE-B-1237923 discloses a deboning band saw comprising an endless band mounted to a support for cyclic movement along a continuously curved path, which may be in the form of an oval, the support being constructed such that part of the material being cut can pass through a region defined within the path of the blade and means for driving the blade.

In WO-A-97/39634, we also describe a method of driving the band saw in which the band is gripped between a drive belt and roller, the roller being rotated by a motor. Although this is satisfactory for many purposes, in some cases the drive is not sufficiently positive. One approach to solving this problem is to perforate the blade and drive the blade via engagement between a gear and the perforations. However, this weakens the blade itself and is undesirable.

In accordance with the present invention, a band saw comprises an endless band mounted to a support for cyclic movement along a closed path; the endless band having a depending, serrated blade, the support being constructed such that part of material being cut can pass through a region defined within the path of the blade; and means for driving the blade including a drive pinion rotated by a motor and engaging the blade serrations so as to move the blade.

With this aspect of the invention, the cutting serrations of the blade are not only used to cut material but also to engage the drive pinion. This maintains the strength of the blade in contrast to providing additional perforations while maintaining a positive drive of the blade.

The closed path may be in the form of an oval.

We have realised that the conventional band saw is rapidly work hardened in use and this is because it is continuously cycled through curved and linear portions of the path. In contrast, with the present invention, we provide that the band moves along a continuously curved path without any linear portions and this surprisingly significantly reduces the degree of work hardening and enables the band to be bent around relatively small diameters, for example about 35mm. This should be contrasted with the minimum diameters of conventional band saw blades which are about 100mm. Furthermore, the band is cycled around an oval path which allows much more accurate cutting to be achieved. Where the saw is to be used for cutting around the spinal column of an animal carcase, the oval shape minimises wastage of material.

Preferably, the support includes an elongate guide member having a stepped guide for the blade, although the stepped guide may be replaced by a slot for the blade.

In order to control the position of the band saw while cutting, the saw may further comprise a depth control member which abuts against the material being cut to control the depth of penetration of the band saw blade into the material. This depth control member is typically in the form of a skid plate.

Band saws according to the invention may be used to remove a section of the spinal column of a carcase without cutting into or breaking the spinal column allowing the carcase to be split conventionally or manually back finned, which ever is more suitable depending on the size of the carcase. The oval nature of the saw path minimises and usually eliminates the risk of carcase contamination while allowing expensive cuts of meat, for example sirloin, to be removed without damage.

Preferably, a cut is made from the ventral aspect as this allows removal of the spinal cord encased in a portion of each vertebrae. The shape of the cut will depend on the path of the projected portion of the endless blade.

Following removal of the spinal cord, the resulting carcase can be cut in half and butchered as normal. Since, in some methods, the animal's head is left in place until further down the slaughter line, preferably the cutting process is made from the sacral or the thoracic ends of the carcase.

The carcase can be cattle, pig, sheep, goat, deer or other suitable animal. The present invention is applicable to a wide range of species, but the first aspect of the invention is especially important for sheep.

An example of a method and a band saw according to the invention will now be described with reference to the accompanying drawings, in which:-
Figure 1 is a side elevation of the band saw;
Figure 2 is an enlarged view on arrow B in Figure 1; and,
Figure 3 is an enlarged, partial view in the direction of arrow A in Figure 1.

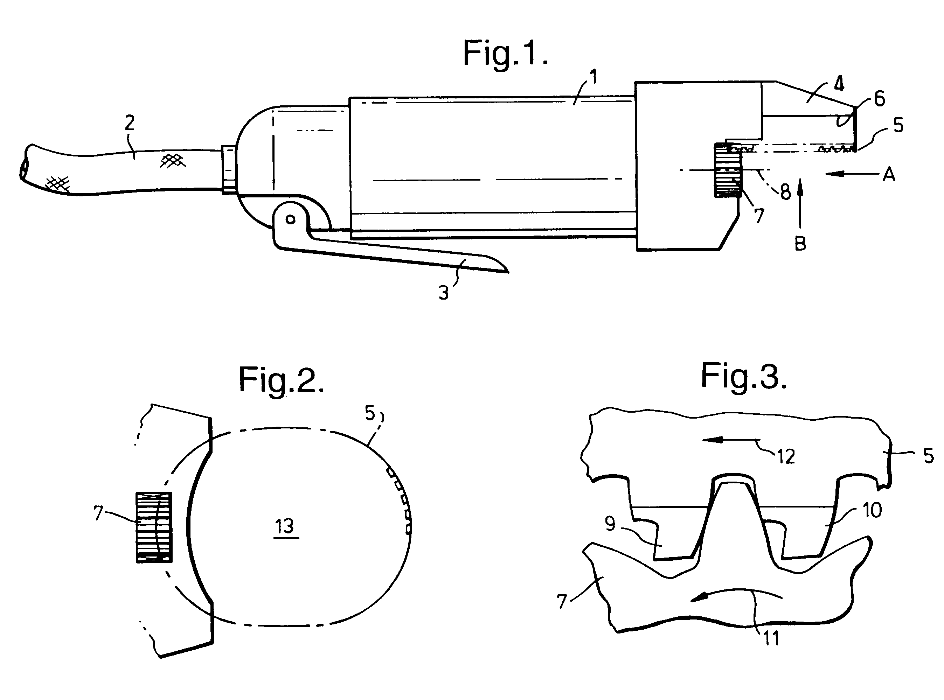

The band saw shown in Figure 1 comprises a housing 1 in which is mounted a motor (not shown) which may be powered by compressed air, hydraulics or electricity depending upon the services available and supplied through a cable 2. A handle 3 is pivoted to the housing 1 for use by the operator. The leading end of the housing 1 includes a projecting guide 4 around which a band saw blade 5 is guided. As can be seen more clearly in Figure 2, the blade 5 follows an oval path (the guide 4 being omitted in Figure 2). A shown in Figure 1, the guide 4 is stepped at 6 to accommodate the blade 5.

A pinion 7 is mounted for rotation about a central, longitudinal axis 8 of the band saw, the pinion 7 being rotated by the rotor. Teeth of the pinion 7 engage between adjacent serrations or teeth 9,10 of the blade 5 as can be seen in Figure 3. Thus, as the pinion 7 is rotated in the direction of an arrow 11, the blade 5 will be moved in a direction 12.

The blade 5 is formed from a steel tube which has been machined to define the serrations 9,10. This results in a very flexible ring blade which can be guided around relatively small diameters of the order of 35mm. This, in combination with the oval path, makes it particularly suitable for use with lamb since the blade will not be work hardened too quickly while bending around relatively small radii of about 35mm.

In use, the projecting section of the band saw is threaded around the spinal column of the carcase which will thus pass through a region 13 (Figure 2) defined within the oval path of the blade 5. The motor is activated causing the pinion 7 to rotate and thus causing the blade 5 to rotate around the oval path and so commence a cutting action. A skid plate (not shown) may be used to ensure that the band is correctly located about the spinal column. The operator then moves the band saw along the spinal column, the spinal column passing through the region within the blade 5 so that it can be removed. It will be noted in particular that the spinal cord is neither cut nor damaged in this operation.

Use of the device introduces another operation into dressing specification located after evisceration. If the head is removed the operator stands on a rise and fall platform and starts at the thoracic end. By positioning the device on the severed end of the spinal column and cutting upwards the core of the spinal column is removed as the operator moves up the carcase. At the sacral end the device can be angled to cut it's way out of the bone and the resulting spinal core can be dropped into an SBO bin. If the head has to be left in place the operator starts at the sacral end and uses the device to cut into the bone just below the tail. The operator now runs the device down the carcase towards the head and stops at the head. The device is then withdrawn over the cut column and the tail end is hooked onto an additional roller located between the back legs. The neck is now butchered manually to produce a cut column with the head attached.

## Claims

1. A band saw comprising an endless band mounted to a support (4) for cyclic movement along a closed path, the endless band having a depending, serrated blade (5), the support being constructed such that part of material being cut can pass through a region (13) defined within the path of the blade, and means for driving the blade (5)
characterised in that said means for driving the blade (5) includes a drive pinion (7) rotated by a motor and engaging the blade serrations (9,10) so as to move the blade (5).

2. A band saw according to claim 1, wherein the closed path is in the form of an oval.

3. A band saw according to any of the preceding claims, wherein the support (4) includes an elongate guide member having a slot for the blade (5).

4. A band saw according to any of the preceding claims, wherein the blade (5) has been machined from a steel tube.

5. A method of removing a section of the spinal column of a carcase using a band saw according to any of the preceding claims, the method comprising drawing the band saw along the spinal column with the spinal column being surrounded by the band saw blade (5).

6. A method according to claim 5, wherein a cut is made from the ventral aspect.

## Patentansprüche

1. Bandsäge mit einem endlosen Band, das an einem Träger (4) zur zyklischen Bewegung entlang eines geschlossenen Weges befestigt ist, wobei das endlose Band eine abhängige, gezahnte Klinge (5) besitzt und der Träger derart aufgebaut ist, daß Teile des geschnittenen Materials durch die Region (13), die durch den Weg der Klinge begrenzt wird, passieren können, und ein Antriebsmittel für die Klinge (5) aufweist, dadurch gekennzeichnet, daß das Antriebsmittel für die Klinge (5) eine Antriebskammwalze (7) aufweist, die durch einen Motor gedreht wird und mit den Klingenzähnen (9, 10) im Eingriff steht, um die Klinge (5) zu bewegen.

2. Bandsäge nach Anspruch 1, dadurch gekennzeichnet, daß der geschlossene Weg die Form eines Ovals aufweist.

3. Bandsäge nach einem der vorangehenden Ansprüche, dadurch gekennzeichnet, daß der Träger (4) ein längliches Führungselement aufweist, das einen Schlitz für die Klinge (5) besitzt.

4. Bandsäge nach einem der vorangehenden Ansprüche, dadurch gekennzeichnet, daß die Klinge (5) aus einem Stahlrohr hergestellt ist.

5. Verfahren zum Entnehmen eines Abschnitts der Wirbelsäule aus einem Kadaver unter Verwendung einer Bandsäge nach einem der vorangehenden Ansprüche, wobei das Verfahren den Verfahrensschritt aufweist, die Bandsäge entlang der Wirbelsäule diese von der Bandsägenklinge (5) umgeben zu ziehen.

6. Verfahren nach Anspruch 5, dadurch gekennzeichnet, daß ein Schnitt aus ventraler Richtung gemacht wird.

## Revendications

1. Scie à ruban comprenant un ruban sans fin monté sur un support (4), pour exécuter des mouvement cyclique le long d'un trajet fermé, le ruban sans fin présentant une lame (5) dentée, suspendue, le support étant fabriqué de manière à ce qu'une partie du matériau en cours de coupe puisse passer à travers une région (13) définie à l'intérieur du trajet de la lame, et un moyen pour entraîner la lame (5), caractérisé en ce que le dit moyen pour entraîner la lame (5) comprend un pignon d'entraînement (7) mis en rotation par un moteur, et coopérant avec la denture (9, 10) de la lame de manière à déplacer la lame (5).

2. Scie à ruban selon la revendication 1, dans laquelle le trajet fermé se présente sous la forme d'un ovale.

3. Scie à ruban selon l'une quelconque des revendications précédentes, dans laquelle le support (4) comprend un organe de guidage allongé présentant une fente pour la lame (5).

4. Scie à ruban selon l'une quelconque des revendications précédentes, dans laquelle la lame (5) a été usinée à partir d'un tube en acier.

5. Procédé pour éliminer une section de la colonne vertébrale d'une carcasse en utilisant une scie à ruban selon l'une quelconque des revendications précédentes, le procédé comprenant l'étape consistant à entraîner la scie à ruban le long de la colonne vertébrale, alors que celle-ci est entourée par la lame (5) de la scie à ruban.

6. Procédé selon la revendication 5, dans lequel une coupe est faite depuis le côté ventral.
